(19) Europäisches Patentamt / European Patent Office / Office européen des brevets

(11) **EP 4 415 453 A1**

(12) **EUROPEAN PATENT APPLICATION**
published in accordance with Art. 153(4) EPC

(43) Date of publication:
**14.08.2024 Bulletin 2024/33**

(21) Application number: **22878971.5**

(22) Date of filing: **07.10.2022**

(51) International Patent Classification (IPC):
**H04W 72/04** (2023.01)    **H04L 5/00** (2006.01)
**H04W 72/12** (2023.01)    **H04B 7/0404** (2017.01)
**H04B 7/0456** (2017.01)

(52) Cooperative Patent Classification (CPC):
**H04B 7/0404; H04B 7/0456; H04L 5/00;**
**H04W 72/04; H04W 72/12**

(86) International application number:
**PCT/KR2022/015186**

(87) International publication number:
**WO 2023/059150 (13.04.2023 Gazette 2023/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.10.2021 KR 20210134073**

(71) Applicant: **LG Electronics Inc.**
**Yeongdeungpo-gu**
**Seoul 07336 (KR)**

(72) Inventors:
• **KANG, Jiwon**
  **Seoul 06772 (KR)**
• **KIM, Hyungtae**
  **Seoul 06772 (KR)**
• **GO, Seongwon**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND DEVICE FOR PERFORMING UPLINK TRANSMISSION AND RECEPTION IN WIRELESS COMMUNICATION SYSTEM**

(57)    A method and a device for pe1forming uplink transmission and reception in a wireless communication system are disclosed. A method for pe1fom1ing uplink transmission in a wireless communication system according to an embodiment of the present disclosure may comprise the steps of: receiving, from a base station, first configuration information related to simultaneous uplink transmission based on multiple spatial parameters; receiving, from the base station, a DCI format 0_0 for scheduling a PUSCH; and transmitting the PUSCH to the base station on the basis of i) a single spatial parameter among the multiple spatial parameters or ii) the multiple spatial parameters, wherein at least one port of the PUSCH corresponds to the multiple spatial parameters.

**FIG.10**

EP 4 415 453 A1

**Description**

[Technical Field]

The present disclosure relates to a wireless communication system, and more specifically to a method and device for performing uplink transmission and reception in a wireless communication system.

[Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical problem of the present disclosure is to provide a method and device for performing uplink transmission and reception in a wireless communication system.

Additionally, an additional technical problem of the present disclosure is to provide a method and device for transmitting and receiving a physical uplink shared channel (PUSCH) scheduled by DCI format 0_0, when simultaneous transmission across multiple panels (STxMP) is configured.

Additionally, an additional technical problem of the present disclosure is to provide a method and device for transmitting and receiving PUSCH based on a single panel or single frequency network (SFN) STxMP.

The technical objects to be achieved by the present disclosure are not limited to the above-described technical objects, and other technical objects which are not described herein will be clearly understood by those skilled in the pertinent art from the following description.

[Technical Solution]

According to an embodiment of the present disclosure, a method of performing uplink transmission by a user equipment (UE) in a wireless communication system may include receiving, from a base station, first configuration information related to simultaneous uplink transmission based on multiple spatial parameters; receiving, from the base station, downlink control information (DCI) format 0_0 for scheduling a physical uplink shared channel (PUSCH); and transmitting, to the base station, the PUSCH based on i) a single spatial parameter among the multiple spatial parameters or ii) the multiple spatial parameters, and at least one port of the PUSCH may correspond to the multiple spatial parameters.

According to another embodiment of the present disclosure, a method of performing uplink reception by a base station in a wireless communication system may include transmitting, to a user equipment (UE), first configuration information related to simultaneous uplink transmission based on multiple spatial parameters; transmitting, to the UE, downlink control information (DCI) format 0_0 for scheduling a physical uplink shared channel (PUSCH); and receiving, from the UE, the PUSCH based on i) a single spatial parameter among the multiple spatial parameters or ii) the multiple spatial parameters, and at least one port of the PUSCH may correspond to the multiple spatial parameters.

[Technical Effects]

According to an embodiment of the present disclosure, a method and device for performing uplink transmission and reception in a wireless communication system may be provided.

Additionally, according to an embodiment of the present disclosure, when the STxMP method is configured, a method and device for transmitting and receiving a PUSCH scheduled by DCI format 0_0 may be provided.

Additionally, according to an embodiment of the present disclosure, a method and device for transmitting and receiving a PUSCH based on a single panel or single frequency network (SFN) STxMP may be provided.

Additionally, according to an embodiment of the present disclosure, When multiple TCI state/spatial relation information is applied to PUSCH, DCI format 0_0 can perform reliability enhancement or single panel-based transmission (e.g., fall back operation).

The technical objects to be achieved by the present disclosure are not limited to the above-described technical objects, and other technical objects which are not described herein will be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates a multiple TRP transmission scheme in a wireless communication system to which the present disclosure may be applied.

FIG. 8 is a diagram for describing an uplink transmission operation of a terminal in a wireless communication system to which the present disclosure may be applied.

FIG. 9 is a diagram for describing an uplink reception operation of a base station in a wireless communication system to which the present disclosure may be applied.

FIG. 10 is a diagram for describing the signaling procedure of the network side and the terminal according to an embodiment of the present disclosure.

FIG. 11 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, ">ooc" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform

- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

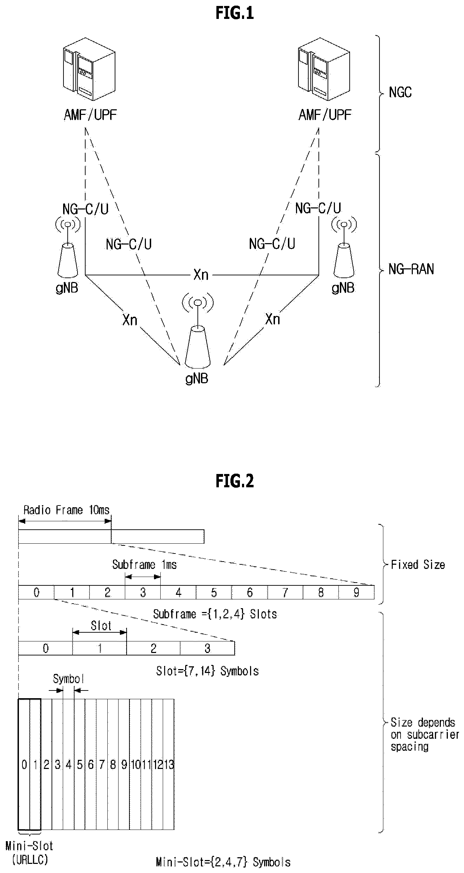

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f/100) \cdot T_c = 10ms$.

Here, a radio frame is configured with 10 subframes having a duration of $T_{sf} = (\Delta f_{max} N_f/1000) \cdot T_c = 1ms$, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^{\mu} \in \{0,..., N_{slot}^{subframe,\mu}-1\}$ in a subframe and are numbered in an increasing order of $n_{s,f}^{\mu} \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu=2$ (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered.

Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

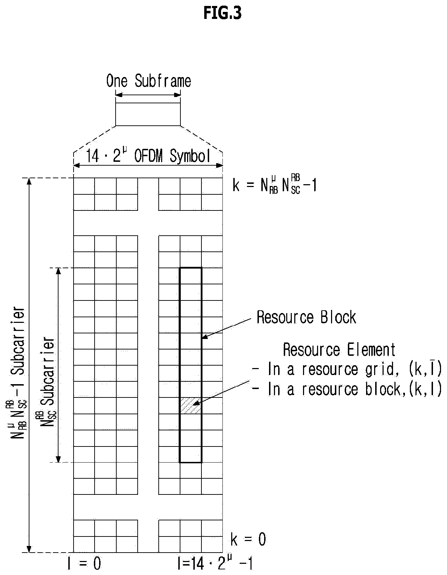

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14\cdot2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu}\leq N_{RB}^{max,\mu}$. The $N_{RB}^{max,\mu}$ represents a maximum transmission bandwidth, which may be different between an uplink and a downlink as well as between numerologies.

In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number). Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

$$【\text{Equation 1}】$$

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n^{\mu}_{CRB} = n^{\mu}_{PRB} + N^{start,\mu}_{BWP,i}$$

$N_{BWP,i}{}^{start,\mu}$ is a common resource block that a BWP starts relatively to common resource block 0.

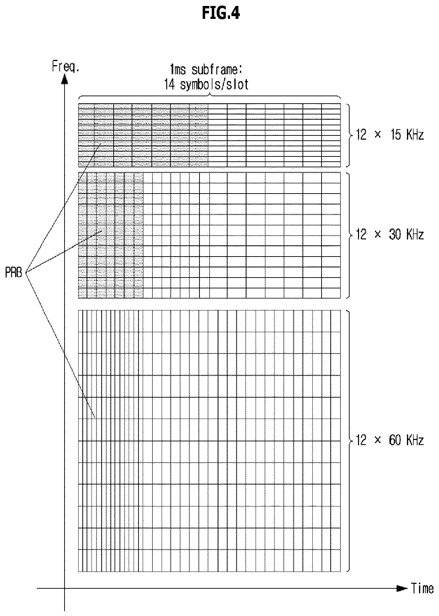

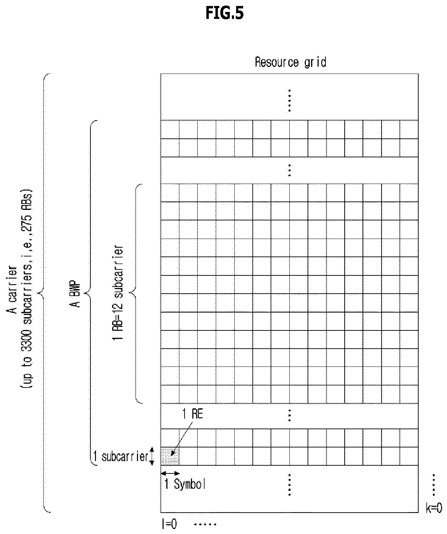

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP.

Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC.

A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP.

But, a configuration on a DL/UL BWP may not be received when a terminal performs an initial access procedure or before a RRC connection is set up, so a DL/UL BWP which is assumed by a terminal under these situations is defined as an initial active DL/UL BWP.

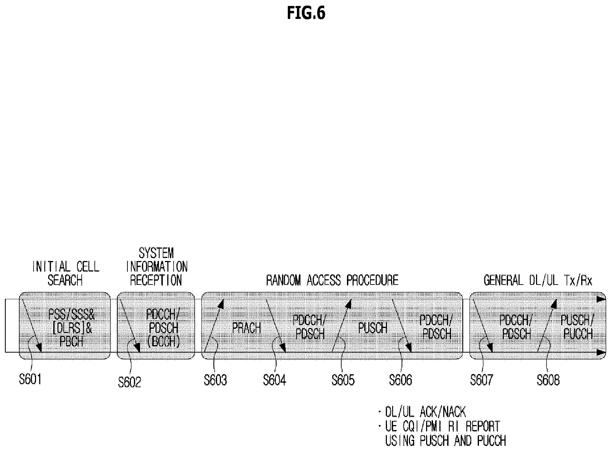

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

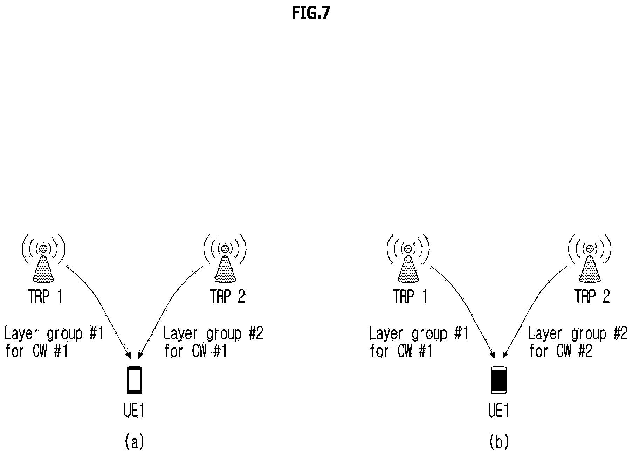

FIG. 7 illustrates a method of multiple TRPs transmission in a wireless communication system to which the present disclosure may be applied.

In reference to FIG. 7(a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

In reference to FIG. 7(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 7(b), it may have a disadvantage that a code rate corresponding to a TB is higher compared to FIG. 7(a). However, it has an advantage that it may adjust a code rate by indicating a different RV (redundancy version) value or may adjust a modulation order of each CW for encoded bits generated from the same TB according to a channel environment.

According to the method illustrated in FIGS. 7 (a) and 7 (b) above, as the same TB is repeatedly transmitted through different layer groups and each layer group is transmitted by different TRP/panel, the data reception probability of the UE may be increased. This is referred to as a Spatial Division Multiplexing (SDM)-based M-TRP URLLC transmission scheme. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be naturally extended and applied to a FDM (frequency division multiplexing) method based on a different frequency domain resource (e.g., RB/PRB (set), etc.) and/or a TDM (time division multiplexing) method based on a different time domain resource (e.g., a slot, a symbol, a sub-symbol, etc.).

Regarding a method for multiple TRPs based URLLC scheduled by single DCI, the following methods are discussed.

1) Method 1 (SDM): Time and frequency resource allocation is overlapped and n (n<=Ns) TCI states in a single slot

1-a) Method 1a.

- The same TB is transmitted in one layer or layer set at each transmission time (occasion) and each layer or each layer set is associated with one TCI and one set of DMRS port(s).
- A single codeword having one RV is used in all spatial layers or all layer sets. With regard to UE, different coded bits are mapped to a different layer or layer set by using the same mapping rule

1-b) Method 1b

- The same TB is transmitted in one layer or layer set at each transmission time (occasion) and each layer or each layer set is associated with one TCI and one set of DMRS port(s).
- A single codeword having one RV is used in each spatial layer or each layer set. RV(s) corresponding to each spatial layer or each layer set may be the same or different.

1-c) Method 1c

The same TB having one DMRS port associated with multiple TCI state indexes is transmitted in one layer at one transmission time (occasion) or the same TB having multiple DMRS ports one-to-one associated with multiple TCI state indexes is transmitted in one layer.

In case of the above-described method 1a and 1c, the same MCS is applied to all layers or all layer sets.

2) Method 2 (FDM): Frequency resource allocation is not overlapped and n (n<=Nf) TCI states in a single slot

- Each non-overlapping frequency resource allocation is associated with one TCI state.
- The same single/multiple DMRS port(s) are associated with all non-overlapping frequency resource allocation.

2-a) Method 2a

-   A single codeword having one RV is used for all resource allocation. With regard to UE, common RB matching (mapping of a codeword to a layer) is applied to all resource allocation.

2-b) Method 2b

-   A single codeword having one RV is used for each non-overlapping frequency resource allocation. A RV corresponding to each non-overlapping frequency resource allocation may be the same or different.

For the above-described method 2a, the same MCS is applied to all non-overlapping frequency resource allocation.
3) Method 3 (TDM): Time resource allocation is not overlapped and n (n<=Nt1) TCI states in a single slot

-   Each transmission time (occasion) of a TB has time granularity of a mini-slot and has one TCI and one RV.
-   A common MCS is used with a single or multiple DMRS port(s) at all transmission time (occasion) in a slot.
-   A RV/TCI may be the same or different at a different transmission time (occasion).

4) Method 4 (TDM): n (n<=Nt2) TCI states in K (n<=K) different slots

-   Each transmission time (occasion) of a TB has one TCI and one RV.
-   All transmission time (occasion) across K slots uses a common MCS with a single or multiple DMRS port(s).
-   A RV/TCI may be the same or different at a different transmission time (occasion).

Downlink multiple TRP (M-TRP) URLLC transmission operation

M-TRP transmission method in which M TRPs transmit data to one terminal may be broadly divided into two types: eMBB M-TRP transmission method, which is a method to increase transmission rate, and URLLC M-TRP transmission method, which is a method to increase reception success rate and reduce latency.

Also from a DCI transport perspective: the M-TRP transmission method can be divided into i) an M-DCI(multiple DCI)-based M-TRP transmission method in which each TRP transmits a different DCI, and ii) an S-DCI(single DCI)-based M-TRP transmission method in which one TRP transmits a DCI. For example, in the case of S-DCI, all scheduling information about data transmitted by M-TRP must be transmitted through one DCI, so it can be used in an ideal BH (ideal BackHaul) environment where dynamic cooperation between two TRPs is possible.

In the case of M-DCI-based M-TRP transmission method, since each of the plurality of TRPs transmits a scheduling DCI, the M-DCI-based M-TRP transmission method can be used not only in the ideal BH but also in a non-ideal BH environment.

In the case of the M-DCI-based M-TRP transmission method, the CORESET through which each TRP transmits DCI may be distinguished. In addition, the UE may recognize the PUSCH (or PUCCH) scheduled by the DCI received through different CORESETs (or, CORESET belonging to a different CORESET group) as a PUSCH (or PUCCH) transmitted to different TRPs or as a PUSCH (or PUCCH) of different TRPs.

In addition, the method for UL transmission (e.g., PUSCH/PUCCH) transmitted to different TRPs can be equally applied to UL transmission (e.g., PUSCH/PUCCH) transmitted to different panels belonging to the same TRP.

NCJT(non-coherent joint transmission, method

The NCJT method refers to a method in which multiple TPs (transmission points) transmit data to one UE using the same time and frequency, and data may be transmitted to different layers using different DMRS ports between TPs. TP may transmit data scheduling information to the UE receiving NCJT through DCI.

At this time, the method in which each TP participating in NCJT transmits scheduling information about the data it transmits to DCI may be referred to as multi-DCI-based NCJT. Since each of N TPs participating in NCJT transmission transmits DL grant DCI and PDSCH to the UE, the UE can receive N DCI and N PDSCH from N TPs.

Differently, a method in which one representative TP transmits scheduling information about the data it transmits and the data transmitted by other TPs through one DCI may be referred to as a single DCI-based NCJT. At this time, N TPs may transmit one PDSCH. At this time, each TP may transmit only some of the multiple layers that make up one PDSCH. For example, when 4-layer data is transmitted, TP 1 transmits layer 2, and TP 2 transmits the remaining 2 layers to the UE.

Hereinafter, the multi-DCI-based NCJT method and the single DCI-based NCJT method will be described in detail.

First, in the case of a single DCI-based M-TRP method, M-TRPs may cooperatively transmit one common PDSCH together, and each TRP participating in cooperative transmission may transmit the corresponding PDSCH by spatially dividing it into different layers (i.e., different DMRS ports). At this time, scheduling information for the PDSCH is indicated to the UE through one DCI, and the QCL RS and QCL type information used for each DMRS port may be indicated in the DCI.

At this time, the above-described method is different from the method of indicating the QCL RS and type to be commonly applied to all DMRS ports through DCI. That is, M TCI states are indicated through the TCI field in the DCI (in case of 2 TRP cooperative transmission, M=2), and the QCL RS and type may be identified for each M DMRS port group using the different M TCI states. Additionally, DMRS port information may be indicated using a new DMRS table.

In addition, in the case of the multi-DCI-based M-TRP method, each M-TRP may transmit a different DCI and PDSCH, and the corresponding PDSCHs may be transmitted (partially or entirely) overlapping each other on frequency/time resources. The corresponding PDSCHs are scrambled through different scrambling IDs, and the corresponding DCIs may be transmitted through CORESETs belonging to different CORESET groups.

Here, the CORESET group may identify the index defined within the CORESET configuration information corresponding to each CORESET. For example, the index is configured to 0 in the CORESET configuration information corresponding to CORESET 1 and 2, and if the index is configured to 1 in the CORESET configuration information corresponding to CORESET 3 and 4, CORESET 1 and 2 may belong to CORESET group 0, and CORESET 3 and 4 may belong to CORESET group 1.

Additionally, if the index is not defined on the configuration information corresponding to the CORESET, the index corresponding to the CORESET may be interpreted as 0. If multiple scrambling IDs are configured in one serving cell or two or more CORESET groups are configured, the UE may be determined to be receiving data using the multi-DCI-based M-TRP method.

In addition, the CORESET group ID described/mentioned in the present disclosure may mean an index/identification information (e.g., ID) for distinguishing the CORESET for each TRP/panel. And the CORESET group may be a group/union of CORESETs distinguished by an index/identification information (e.g., ID)/the CORESET group ID, etc. to distinguish the CORESETs for each TRP/panel.

For example, CORESET group ID may be specific index information defined within CORSET setting information. For example, a CORESET group may be configured/indicated/defined by an index defined within the CORESET configuration information for each CORESET.

Additionally or alternatively, CORESET group ID may mean an index/identification information/indicator, etc. for distinction/identification between CORESETs configured/related to each TRP/panel. The CORESET group ID described/mentioned in the present disclosure may be replaced with a specific index/specific identification information/specific indicator for distinction/identification between CORESETs configured/related to each TRP/panel.

The CORESET group ID, that is, a specific index/specific identification information/specific indicator for distinction/identification between CORESETs configured/related to each TRP/panel may be configured/indicated through higher layer signaling (e.g., RRC signaling)/L2 signaling (e.g., MAC-CE)/L1 signaling (e.g., DCI), etc.

For example, PDCCH detection for each TRP/panel may be configured/indicated to be performed on a per-CORESET group basis.

Additionally or alternatively, uplink control information (e.g., CSI, HARQ-A/N, SR) and/or uplink physical channel resources (e.g., PUCCH/PRACH/SRS resources) may be configured/indicated to be managed/controlled separately for each TRP/panel in the CORESET group unit.

Additionally or alternatively, HARQ A/N (process/retransmission) for PDSCH/PUSCH, etc. scheduled for each TRP/panel on a per CORESET group basis may be managed.

For example, the higher layer parameter 'ControlResourceSet IE (information element)' may be used to configure a time/frequency control resource set (CORESET).

For example, the control resource set (CORESET) may be related to detection and reception of downlink control information. The 'ControlResourceSet IE' may include a CORESET-related ID (e.g., 'controlResourceSetID'), an index of the CORESET pool for CORESET (e.g., 'CORESETPoolIndex'), time/frequency resource configurations for CORESET, and/or TCI information related to CORESET.

For example, the index of the CORESET pool (e.g., 'CORESETPoolIndex') may be configured to 0 or 1. In the above description, CORESET group may correspond to CORESET pool, and CORESET group ID may correspond to CORESET pool index (e.g., 'CORESETPoolIndex').

Additionally or alternatively, for each CORESET, the UE may be provided with CORESET index, DM-RS scrambling sequence initialization value by 'pdcch-DMRS-ScramblingID', precoder granularity in terms of number of REGs in the frequency domain, number of consecutive symbols given by 'duration' (i.e. continuous time interval of CORESET), the number of RBs, TCI information, or/and CCE-to-REG mapping parameters, etc., by 'ControlResourceSet IE(information element)'.

Whether a single DCI-based M-TRP method or a multi-DCI-based M-TRP method may be indicated to the UE through separate signaling. For example, when multiple CRS patterns are indicated to the UE for M-TRP operation for one serving cell, depending on whether it is a single DCI-based M-TRP method or a multi-DCI-based M-TRP method, PDSCH rate matching for CRS (cell-specific reference signal) may vary. Here, a tracking reference signal (TRS) may be used as a function of CRS, and the UE may use TRS to estimate timing offset, delay spread, frequency offset, and Doppler spread.

Additionally, NCJT may be divided into fully overlapped NCJT, in which the time-frequency resources transmitted by each TP completely overlap, and partially overlapped NCJT, in which only some time-frequency resources overlap. That is, in the case of partially overlapped NCJT, data from both TP 1 and TP 2 can be transmitted in some time-frequency resources, and only data from either TP 1 or TP 2 may be transmitted in the remaining time-frequency resources.

In the case of the M-TRP NCJT transmission method, two TRPs may transmit different data using different layers/DMRS ports.

For example, DMRS ports belonging to different CDM groups may be grouped. In addition, a DMRS port belonging to the first CDM group may be received using the first QCL beam information (i.e., first TCI state indicated), and a DMRS port belonging to the second CDM group may be received using the second QCL beam information (i.e., indicated second TCI state).

As described above, since the layers/DRMS ports transmitted by the two TRPs are separate and data is not transmitted through a composite channel, there may be no need to align the channel phases of the two TRPs. The above method may be referred to as the (M-TRP) NCJT method, and may also be referred to as the independent layer NCJT method.

M-TRP URLLC transmission operation

DL MTRP URLLC means that multiple TRPs transmit the same data/DCI by using a different layer/time/frequency resource. For example, TRP 1 transmits the same data/DCI in resource 1 and TRP 2 transmits the same data/DCI in resource 2.

That is, when the DL M-TRP URLLC transmission scheme is configured, the UE may receive the same data/DCI using different space/time/frequency resources. At this time, the UE may receive an indication of the QCL RS/type (i.e., DL TCI state) used in the space/time/frequency resource receiving the corresponding data/DCI from the base station.

For example, when the same data/DCI is received in resource 1 and resource 2, a DL TCI state used in resource 1 and a DL TCI state used in resource 2 may be configured. UE may achieve high reliability because it receives the same data/DCI through resource 1 and resource 2. Such DL MTRP URLLC may be applied to a PDSCH/a PDCCH.

UL M-TRP URLLC transmission method refers to a method in which multiple TRPs receive the same data/UCI from one terminal using different space/time/frequency resources. For example, TRP 1 may receive the same data/UCI from the UE on resource 1, and TRP 2 may receive the same data/UCI from the terminal on resource 2. Additionally, TRP 1 and TRP 2 may share data/UCI received from the UE through a backhaul link (connected between TRPs).

That is, when the UL M-TRP URLLC transmission scheme is configured, the UE may transmit the same data/UCI to each TRP using different space/time/frequency resources. At this time, the UE may be indicated by the base station of the Tx beam and Tx power (i.e., UL TCI state) to be used in space/time/frequency resources transmitting the same data/UCI. For example, when the same data/UCI is transmitted in resource 1 and resource 2, the UE may be indicated by the base station of the UL TCI state used in resource 1 and the UL TCI state used in resource 2. Such UL MTRP URLLC may be applied to PUSCH/PUCCH.

Also, in describing the present disclosure, when receiving/transmitting data/DCI/UCI through a specific space/time/frequency resource, using (or mapping) a specific TCI state (or TCI) may mean, in the case of DL, that a channel is estimated from a DMRS using a QCL type and a QCL RS indicated by a specific TCI state in a specific space/time/frequency resource, and data/DCI/UCI is received/demodulated through the estimated channel.

In addition, when receiving/transmitting data/DCI/UCI through specific space/time/frequency resources, using (or mapping) a specific TCI state (or TCI) means, in the case of UL, may mean that DMRS and data/UCI are transmitted/modulated using a Tx beam and/or Tx power indicated by a specific TCI state in a specific space/time/frequency resource.

And, the UL TCI state may include Tx beam or Tx power information of the UE. In addition, the base station may configure spatial relation information and the like for the UE through other parameters instead of the TCI state.

For example, the UL TCI state may be directly indicated to the UE through a UL grant DCI. Alternatively, the UL TCI state may mean spatial relation information of an SRS resource indicated through an SRS resource indicator (SRI) field of the UL grant DCI. Alternatively, the UL TCI state may mean an open loop (OP) Tx power control parameter connected to a value indicated through the SRI field of the UL grant DCI.

Here, the OL Tx power control parameter may include, for example, j (index and alpha for OP parameter(s) Po (up to 32 parameter value sets per cell), q_d (indices of DL RS resources for PL (path loss) measurement (up to 4 measurements per cell), or/and I (closed loop power control process index (up to 2 processes per cell)).

As another embodiment of the present disclosure, the M-TRP eMBB transmission scheme refers to a scheme in which M-TRP transmits different data/DCI using different space/time/frequency resources. If the M-TRP eMBB transmission method is configured, the UE may receive a plurality of TCI states from the base station through DCI, and may assume that data received using the QCL RS indicated by each of the plurality of TCI states is different data.

In addition, since the RNTI for M-TRP URLLC and the RNTI for M-TRP eMBB are separately used, the UE may determine whether specific transmission/reception is M-TRP URLLC transmission/reception or M-TRP eMBB transmission/reception. For example, when the RNTI for URLLC is used and CRC is masked for DCI, the UE may recognize the transmission as URLLC transmission. And, when the RNTI for eMBB is used and CRC masked for DCI, the UE may identify the corresponding transmission as eMBB transmission. As another example, the base station may configure the M-TRP URLLC transmission/reception method or the M-TRP eMBB transmission/reception method to the UE through new signaling.

For convenience of description of the present disclosure, it is assumed that 2 TRPs cooperate with each other to perform transmission/reception operations, but is not limited thereto. That is, the present disclosure may be extended and applied even in a multiple TRP environment of 3 or more, and may be extended and applied even in an environment where transmission/reception is performed using different panels or beams in the same TRP. The UE may recognize different TRPs as different TCI states. When the UE transmits/receives data/DCI/UCI using TCI state 1, it means that data/DCI/UCI/ is transmitted/received from (or through TRP 1).

The present disclosure may be utilized in a situation in which an MT-RP cooperatively transmits a PDCCH (repeatedly transmits the same PDCCH or transmits dividedly). In addition, the present disclosure may be utilized in a situation where the M-TRP cooperatively transmits PDSCH or cooperatively receives PUSCH/PUCCH.

Also, in describing the present disclosure, repetitive transmission of the same PDCCH by a plurality of base stations (i.e., M-TRPs) may mean that the same DCI is transmitted through a plurality of PDCCH candidates, and it means that multiple base stations repeatedly transmit the same DCI. Here, two DCIs having the same DCI format/size/payload can be regarded as the same DCI.

Alternatively, if the scheduling result is the same even though the payloads of the two DCIs are different, the two DCIs may be regarded as the same DCI. For example, the time domain resource allocation (TDRA) field of the DCI may relatively determine a slot/symbol position of data and a slot/symbol position of A(ACK)/N(NACK) based on a DCI reception time point.

In this case, when the DCI received at time n and the DCI received at time n+1 indicate the same scheduling result to the UE, the TDRA fields of the two DCIs are different, and as a result, the DCI payloads are different. Accordingly, when the scheduling result is the same even though the payloads of the two DCIs are different, the two DCIs may be regarded as the same DCI. Here, the number of repetitions R may be directly instructed by the base station to the UE or mutually promised.

Alternatively, even if the payloads of the two DCIs are different and the scheduling results are not the same, if the scheduling result of one DCI is a subset of the scheduling result of the other DCI, the two DCIs may be regarded as the same DCI.

For example, if the same data is TDM and repeatedly transmitted N times, DCI 1 received before the first data indicates data repetition (or scheduling) N times, and DCI 2 received before the second data indicates N-1 data repetition (scheduling). At this time, the scheduling result (or data) of DCI 2 becomes a subset of the scheduling result (or data) of DCI 1, and both DCIs have scheduling results for the same data. Therefore, even in this case, the two DCIs may be regarded as the same DCI.

And, in explaining the present disclosure, the operation of dividing and transmitting the same PDCCH by a plurality of base stations (i.e., M-TRP) may mean that one DCI is transmitted through one PDCCH candidate, but TRP 1 transmits some resources defined for the corresponding PDCCH candidate, and TRP 2 transmits the remaining resources.

For example, when TRP 1 and TRP 2 divide and transmit PDCCH candidates corresponding to the aggregation level m1 + m2, PDCCH candidates are divided into PDCCH candidate 1 corresponding to aggregation level m1 and PDCCH candidate 2 corresponding to aggregation level m2, and TRP 1 may transmit PDCCH candidate 1 and TPR 2 may transmit PDCCH candidate 2. In this case, TRP 1 and TRP 2 may transmit PDCCH candidate 1 and PDCCH candidate 2 using different time/frequency resources. After receiving PDCCH candidate 1 and PDCCH candidate 2, the terminal may generate a PDCCH candidate corresponding to the merge level m1 + m2 and attempt DCI decoding.

At this time, a scheme in which the same DCI is divided and transmitted to several PDCCH candidates may be implemented in the following two schemes.

In the first method, a DCI payload (e.g., control information + CRC) is encoded through one channel encoder (e.g., a polar encoder) and transmitted in two TRPs. That is, the first method refers to a method of dividing coded bits obtained according to an encoding result into two TRPs and transmitting them. Here, the entire DCI payload may be encoded in the coded bits transmitted by each TRP, but is not limited thereto, and only a part of the DCI payload may be encoded.

The second method is a method of dividing a DCI payload (e.g., control information + CRC) into two DCIs (e.g., DCI 1 and DCI 2) and then encoding each of them through a channel encoder (e.g., a polar encoder). Then, each of the two TRPs may transmit coded bits corresponding to DCI 1 and coded bits corresponding to DCI 2 to the UE.

That is, multiple base stations (M-TRPs) dividing/repeatedly transmitting the same PDCCH over multiple MOs (monitoring occasions) may mean that 1) coded bits encoding the entire DCI content of the corresponding PDCCH are repeatedly transmitted through each MO for each base station (S-TRP), 2) coded bits encoding the entire DCI content of the corresponding PDCCH are divided into a plurality of parts, and each base station (S-TRP) transmits different parts through each MO, or 3) the DCI content of the corresponding PDCCH is divided into a plurality of parts, and different parts are encoded (i.e., separately encoded) for each base station (S-TRP) and transmitted through each MO.

Repeatedly/divided transmission of the PDCCH may be understood as transmission of the PDCCH multiple times over several transmission occasions (TOs).

Here, TO may mean a specific time/frequency resource unit in which the PDCCH is transmitted. For example, when the PDCCH is transmitted multiple times (to a specific RB) over slots 1, 2, 3, and 4, TO may mean each slot. As another example, when the PDCCH is transmitted multiple times (in a specific slot) over RB sets 1, 2, 3, and 4, TO may mean each RB set. As another example, if the PDCCH is transmitted multiple times over different times and frequencies, TO may mean each time/frequency resource. In addition, a different TCI state used for DMRS channel estimation may be configured for each TO, and TOs with different TCI states may be assumed to be transmitted by different TRPs/panels.

Repetitive or divided transmission of PDCCHs by a plurality of base stations means that PDCCHs are transmitted over multiple TOs, and the union of TCI states configured in the corresponding TOs is composed of two or more TCI states. For example, when the PDCCH is transmitted over TO 1,2,3,4, TCI states 1,2,3,4 may be configured in each of TO 1,2,3,4, and it means that TRP i cooperatively transmitted the PDCCH in TO i.

In describing the present disclosure, if the UE repeatedly transmits the same PUSCH to a plurality of base stations (i.e., M-TRPs), it may mean that the UE transmits the same data through a plurality of PUSCHs, and each PUSCH may be transmitted while being optimized for UL channels of different TRPs.

For example, the UE may repeatedly transmit the same data through PUSCH 1 and PUSCH 2. At this time, PUSCH 1 is transmitted using UL TCI state 1 for TRP 1, and PUSCH may be transmitted by scheduling a value optimized for a channel of TRP 1 through link adaptation such as a precoder/MCS. PUSCH 2 is transmitted using UL TCI state 2 for TRP 2, and link adaptation such as a precoder/MCS is also scheduled with a value optimized for the channel of TRP 2, and PUSCH may be transmitted. In this case, PUSCH 1 and PUSCH 2 that are repeatedly transmitted may be transmitted at different times and may be TDM, FDM, or SDM.

Also, in describing the present disclosure, an operation in which the UE divides and transmits the same PUSCH to a plurality of base stations (i.e., M-TRP) may mean that one data is transmitted through one PUSCH, but resources allocated to the PUSCH are divided and transmitted in an optimized manner for UL channels of different TRPs.

For example, the UE may transmit the same data through 10 symbol PUSCH. At this time, the first 5 symbols among 10 symbols can be transmitted using UL TCI state 1 for TRP 1, and the UE may transmit a 5-symbol PUSCH (through TRP 1) by receiving a scheduling value optimized for link adaptation such as a precoder/MCS and a channel of TRP 1. The remaining 5 symbols may be transmitted using UL TCI state 2 for TRP 2, and the UE may transmit the remaining 5 symbol PUSCH (via TRP 2) by receiving a scheduling value optimized for link adaptation such as precoder/MCS and the channel of TRP 2.

In the above example, a method of dividing one PUSCH into time resources and TDM for transmission toward TRP 1 and transmission toward TRP 2 has been described. However, the present disclosure is not limited thereto, and the UE may divide and transmit the same PUSCH to a plurality of base stations by exclusively using the FDM/SDM scheme.

The UE may repeatedly transmit the PUCCH to a plurality of base stations (similar to PUSCH transmission) or divide and transmit the same PUCCH.

In addition, when multiple TOs are indicated to the UE for repeated or divided transmission of PDCCH/PDSCH/PUSCH/PUCCH, each TO may transmit UL toward a specific TRP or receive DL from a specific TRP. Here, UL TO (or, TO of TRP 1) transmitted toward TRP 1 may mean TO using the first value of two spatial relations indicated to the UE, two UL TCIs, two UL power control parameters, or two PL(path-loss)-RSs. In addition, UL TO (or, TO of TRP 2) transmitted toward TRP 2 means TO using the second value of two spatial relations indicated to the UE, two UL TCIs, two UL power control parameters, and two PL-RSs.

Similarly, during DL transmission, DL TO transmitted by TRP 1 (or TO of TRP 1) means TO using the first value of the two DL TCI states indicated to the UE (e.g., when two TCI states are configured in CORESET), and DL TO (or, TO of TRP 2) transmitted by TRP 2 may mean TO using the second value of the two DL TCI states indicated to the UE (for example, when two TCI states are configured in CORESET).

The present disclosure may be expanded and applied to various channels such as PUSCH/PUCCH/PDSCH/PDCCH. Additionally, the present disclosure may be extended and applied to both the case of repeatedly transmitting the channel to different space/time/frequency resources and the case of divided transmission.

Additionally or alternatively, in an improved wireless system, for M-TRP based PUCCH repetitive transmission, two spatial relation information may be configured for PUCCH resources.

That is, if PC (power control) parameters such as PL-RS, alpha, P0, and closed loop index are included/configured in each spatial relation information, the spatial relation RS may be configured. As a result, PC information and spatial relation RS information corresponding to the two TRPs may be configured through the two spatial relation information. In addition, the UE may transmit PUCCH using the first spatial relation information in TO 1, and transmit the same UCI (i.e. CSI, ACK/NACK, SR) through PUCCH using the second spatial relation information in TO 2.

In describing the present disclosure, a PUCCH resource configured with two spatial relation information is referred to as an M-TRP PUCCH resource, and a PUCCH resource configured with one spatial relation information is referred to as an S-TRP PUCCH resource.

QCL type-D RS or/and TCI state (i.e., TCI) may refer to a spatial parameter (i.e., QCL reference RS from beam perspective) and may be extended and interpreted as a reference RS or source RS for that parameter or other beam/space-related parameters.

Additionally or alternatively, the indication of QCL type-D RS may be omitted in environments where analog beamforming is not used, such as low frequency bands. At this time, in the present disclosure, QCL type-D RS may be interpreted as QCL reference RS. That is, if only one reference RS exists through the TCI state, the QCL type-D RS may refer to the corresponding RS.

Additionally or alternatively, from a UL perspective, the TCI state (or TCI) may refer to and include the reference/source RS for the UL beam, and may indicate the spatial relation RS (or/and pathloss RS) in a basic wireless communication system. Here, the pathloss RS may be the same as the corresponding RS, and may be associated with the UL TCI state or configured separately.

Simultaneous transmission across multiple panels (STxMP) transmission method

In an improved wireless communication system, uplink transmissionrelated capacity, coverage, and/or reliability may be improved by supporting STxMP transmission of the UE. STxMP transmission refers to a method of performing simultaneous UL transmission by simultaneously generating multiple transmission beams through multiple panels of the UE.

STxMP transmission schemes may be classified into i) a scheme in which each panel transmits the same signal (scheme 1), and ii) a scheme in which each panel transmits different signals (scheme 2). In addition, Scheme 2 may be classified as a scheme in which each panel divides and transmits multiple layers/ports constituting the same channel/RS resource (Method 2-1) and a scheme of transmitting different channels/RS resources in each panel (Scheme 2-2).

Scheme 1 is a method that applies the DL single frequency network (SFN) transmission method of an improved wireless communication system to uplink multiple panel transmission, through which UL reliability and/or coverage may be improved. Here, the DL SFN method refers to a method in which multiple TRPs transmit the same DL signal using the same time/frequency resources. That is, each UE panel for uplink transmission in scheme 1 can correspond to each TRP in the DL SFN method.

UL capacity/coverage/data rate/efficiency may be improved by scheme 2. Scheme 2-1 is a method that applies M-TRP NCJT transmission to multiple panel-based uplink transmission. Scheme 2-2 is a method in which each panel transmits different signals using the same time/frequency resources (e.g., one panel transmits PUCCH and the other panel transmits SRS).

There is a difference between the two in that scheme 1 is the same layer/port transmission, and scheme 2-1 is a different layer/port transmission. However, scheme 1 and scheme 2-1 may be the same/similar in terms of resource allocation method for channel/RS resources.

In the present disclosure, a method for determining/configuring a scheme for PUSCH scheduling in DCI format 0_0 (or fallback DCI format) will be described.

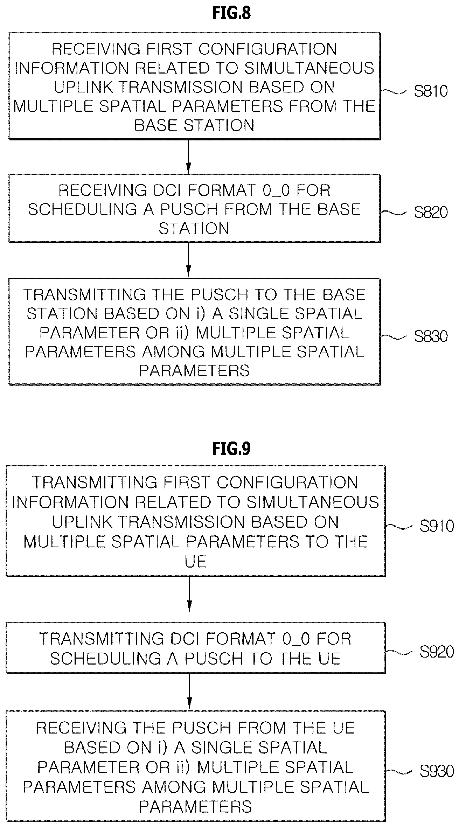

FIG. 8 is a diagram for describing an uplink transmission operation of a terminal in a wireless communication system to which the present disclosure may be applied.

The UE may receive first configuration information related to simultaneous uplink transmission based on multiple spatial parameters from the base station (S810).

As an example, the first configuration information may include information on whether simultaneous uplink transmission based on multiple spatial parameters is applied (or information on whether STxMP transmission and/or single panel transmission is applied, etc.).

As an example, the first configuration information may include information configuring a simultaneous uplink transmission method based on multiple spatial parameters. Simultaneous uplink transmission schemes may be classified into i) a scheme in which each panel transmits the same signal (scheme 1), and ii) a scheme in which each panel transmits different signals (scheme 2).

As another example, the first configuration information may include configuration information related to spatial parameters (e.g., panel/beam, etc.) for uplink transmission of the UE.

As an example, spatial parameter-related configuration information may include at least one of unified TCI state related information, TCI state information configured for CORESET, spatial relation information/TCI state information configured for PUCCH resources, or PDSCH-related TCI state information.

Here, the PDSCH-related TCI state information may include TCI state information set in at least one code point of the TCI state configured for the PDSCH.

The UE may receive downlink control information (DCI) format 0_0 for scheduling a physical uplink shared channel (PUSCH) from the base station (S820).

Here, DCI may include indication information (e.g., 'enabler', etc.) indicating whether to enable simultaneous uplink transmission based on multiple spatial parameters.

For example, based on enabling of simultaneous uplink transmission based on multiple spatial parameters being indicated by indication information, the UE may transmit the PUSCH to the base station based on the multiple spatial parameters.

As another example, based on disabling of simultaneous uplink transmission based on multiple spatial parameters being indicated by indication information, the UE may transmit the PUSCH to the base station based on a single spatial parameter among the multiple spatial parameters.

The UE may transmit the PUSCH to the base station based on a single spatial parameter or ii) multiple spatial parameters among multiple spatial parameters (S830).

Here, at least one port of the PUSCH (e.g., antenna port/DMRS port of the PUSCH, etc.) may correspond to multiple spatial parameters. That is, at least one port of the PUSCH may correspond to/connect to multiple spatial parameters (e.g., source RS indicated by UL TCI state or source RS according to spatial relation information).

Specifically, transmitting the PUSCH based on multiple panels (i.e., multiple spatial parameters) may mean that the UE transmits the PUSCH in a single frequency network (SFN) STxMP method. Additionally, PUSCH may be transmitted to the base station through the same layer/port based on multiple spatial parameters.

As an example, based on multiple spatial parameters being indicated by an unified TCI state (i.e., based on multiple RSs being configured according to the unified TCI state), the UE may transmit PUSCH to the base station based on a single spatial parameter among multiple spatial parameters. That is, the UE may transmit the PUSCH to the base station using a single RS among a plurality of RSs having a QCL relation according to the unified TCI state.

As another example, based on multiple spatial parameters being indicated by the unified TCI state, the UE may transmit PUSCH to the base station based on the multiple spatial parameters. Specifically, the UE may transmit the PUSCH to the base station using a plurality of RSs having a QCL relation according to the unified TCI state. That is, the UE may transmit PUSCH according to the STxMP method based on multiple RSs.

As another example, the multiple spatial parameters may include multiple spatial relation reference signals (RS) or multiple TCI states configured for the PUCCH with the lowest ID among at least one PUCCH resource.

As an example, the UE may transmit a PUSCH to the base station based on a single spatial relation RS among the multiple spatial relation RS or a single TCI state among the multiple TCI states configured for the PUCCH resource with the lowest ID.

As another example, the UE may transmit the PUSCH to the base station based on the multiple spatial relation RSs or multiple TCI states configured for the PUCCH resource with the lowest ID.

As another example, the UE may transmit a PUSCH to the base station based on the spatial relation RS or TCI state configured for the PUCCH resource with the lowest ID among at least one PUCCH resource for which a single spatial relation RS or a single TCI state is configured.

As another example, based on second configuration information related to the default beam for PUSCH (e.g., 'enableDefaultBeamPL-ForPUSCH0-0') being received from the base station, multiple spatial parameters may include i) multiple TCI states configured for the CORESET with the lowest ID among at least one CORESET, or ii) multiple RSs (e.g., QCL type-D RS) corresponding to the codepoint with the lowest ID among the codepoints in the TCI state configured for the PDSCH.

As an example, the UE may transmit the PUSCH to the base station based on a single TCI state among multiple TCI states configured for the CORESET with the lowest ID or a single RS among multiple RSs (e.g., QCL type-D RS) corresponding to the codepoint with the lowest ID.

As another example, the UE may transmit PUSCH to the base station based on multiple TCI states configured for CORESET with the lowest ID or multiple RS (e.g., QCL type-D RS) corresponding to the codepoint with the lowest ID.

As another example, based on the number of multiple TCI states configured for the CORESET with the lowest ID or the number of multiple RSs corresponding to the codepoint with the lowest ID exceeding M, the UE may transmit a PUSCH to the base station based on N (N is a natural number less than M) TCI states among the multiple TCI states configured for the CORESET with the lowest ID or N RSs among the multiple RSs (e.g., QCL type-D RS) corresponding to the codepoint with the lowest ID.

At this time, M may be a predefined value or a value reported by the UE (via UE capability information).

As another example, the UE may transmit PUSCH to the base station based on a CORESET with the lowest ID among at least one CORESET for which a single TCI state is configured, or an RS corresponding to the code point (e.g., QCL type-D RS) with the lowest ID among at least one code point indicating a single RS (e.g., QCL type-D RS).

FIG. 9 is a diagram for describing an uplink reception operation of a base station in a wireless communication system to which the present disclosure may be applied.

The base station may transmit first configuration information related to simultaneous uplink transmission based on multiple spatial parameters to the UE (S910).

The base station may transmit DCI format 0_0 for scheduling PUSCH to the UE (S920).

The base station may receive the PUSCH from the UE based on i) a single spatial parameter among multiple spatial parameters or ii) multiple spatial parameters. At this time, based on a PUSCH based on multiple spatial parameters being received from the UE, the PUSCH may be transmitted to the base station through the same layer and port.

Since the PUSCH transmission method based on the first configuration information, DCI format 0_0, and multiple spatial parameters or/and single spatial parameters has been described with reference to FIG. 8, redundant description will be omitted.

Hereinafter, a method for determining/configuring the transmission scheme of the PUSCH scheduled by DCI format 0_0 will be described in more detail.

When PUSCH is scheduled by DCI format 0_0, except when unified TCI state applies, the PUSCH may be transmitted through a single layer without an SRS resource indicator (SRI)/transmitted precoding matrix indicator (TPMI)/TRI field.

The transmission method of the PUSCH described above is a transmission method defined to minimize the DCI payload and to perform fallback transmission in an environment where link adaptation is not performed well (e.g., when connecting for the first time, TPMI/TRI/Beam information error situation, etc.).

Beam-related configuration methods for PUSCH scheduled by DCI format 0_0 can be divided into i) a method based on the spatial relation of the lowest ID PUCCH resource, ii) a method of using TCI state when default spatial relation/PL RS is applied, and iii) a method of using unified TCI state.

Hereinafter, when there are configurations/indications related to STxMP transmission, a method of transmitting PUSCH scheduling through DCI format 0_0 according to the method described above will be described.

Embodiment 1

Embodiment 1 relates to a method of transmitting a scheduled PUSCH through DCI format 0_0 based on the unified TCI state. RS indicated by the unified TCI state may be applied to the UL beam regardless of DCI format.

In an improved wireless communication system, a single TCI state may be indicated/used, but may be expanded to multiple TCI states to support STxMP transmission. That is, multiple unified TCI states may be indicated by MAC-CE and/or DCI.

The unified TCI state is used to indicate a common beam to target channels/RSs to be applied to a specific state. Therefore, the unified TCI state may be applied to PUSCH transmission regardless of DCI format. However, in a basic wireless communication system, PUSCH scheduled by DCI format 0_0 may be subject to restrictions on the applicable scheme (e.g., multi-layer transmission is not possible).

Accordingly, the PUSCH scheduled in DCI format 0_0 may be configured/indicated/defined to always be transmitted through a single beam/panel (Embodiment 1-1). That is, when multiple TCI states are indicated, only one TCI state among the multiple TCI states may be applied to PUSCH transmission.

As an another example, PUSCH scheduled in DCI format 0_0 is also transmitted through multiple beams/panels by applying multiple TCI states, but only STxMP scheme 1 (i.e., transmitting the same signal from each panel) may be applied (regardless of STxMP applied to PUSCH or other UL channels/RS scheduled in other DCI formats) (Embodiment 1-2).

Embodiments 1-1 and 1-2 may perform stable transmission by applying single panel transmission or STxMP scheme 1 to suit the purpose of utilizing DCI format 0_0 (e.g., for the purpose of responding to absence of beam/panel/precoder/link adaptation information or error situations, etc.).

Embodiment 1-1 and Embodiment 1-2 may be applied not only to PUSCH scheduled by DCI format 0_0, but also to channels (e.g., PUCCH)/RSs to which the unified TCI state is applied, which must guarantee stable performance or be transmitted through a single port.

Embodiment 2

Embodiment 2 relates to a method of transmitting PUCCH according to the spatial relation of the lowest ID PUCCH resource.

For STxMP transmission for PUCCH, when a plurality of spatial relation RSs/TCI states are configured in (some) PUCCH resources, a method for configuring a beam of a DCI format 0_0-based PUSCH transmitted in conjunction with the corresponding PUCCH spatial relation will be described.

PUSCH scheduled in DCI format 0_0 may be transmitted through a single beam/panel (Embodiment 2-1). That is, when multiple TCI states are indicated, only one TCI state among the plurality of TCI states may be applied to PUSCH transmission.

As an example, only one specific TCI state (e.g., the first TCI state, etc.) among a plurality of TCI states configured in the lowest ID PUCCH resource may be applied to PUSCH transmission (Embodiment 2-1a).

As an another example, among PUCCH resources for which a single TCI state is configured, the TCI state of the lowest ID PUCCH resource may be applied to PUSCH transmission (Embodiment 2-1b).

As an another example, PUSCH scheduled in DCI format 0_0 is also transmitted to multiple beams/panels by applying multiple TCI states, but only STxMP scheme 1 (i.e., transmitting the same signal in each panel) may be applied (regardless of STxMP applied to PUSCH or other UL channels/RS scheduled in other DCI formats) (Embodiment 2-2).

As an example, a separate enabler for STxMP application to DCI format 0_0 may be defined/configured. If STxMP is enabled, among PUCCH resources for which a plurality of TCI states are configured, a plurality of TCI states of the lowest ID PUCCH resource (i.e., a plurality of TCI states set for the lowest ID PUCCH resource) may be configured/indicated/defined to be applied to the beam/panel.

Embodiment 3

If the default spatial relation/PL RS is applied (i.e., configuration information related to the default beam (e.g., 'enableDefaultBeamPL-ForPUSCH0-0' is configured), Embodiment 3 relates to a method of transmitting a PUSCH scheduled by DCI format 0_0.

When the default spatial relation/PL RS applies, the UE may automatically configure the QCL Type-D RS of the TCI state of the lowest ID CORESET or the codepoint of the lowest ID PUSCH TCI state to the spatial relation and/or PL RS.

If multiple TCI states are configured for (some) CORESETs for M-TRP transmission (e.g., M-TRP SFN transmission, etc.), or if multiple TCI states are configured to a single codepoint among the codepoints of the PDSCH TCI state activated by MAC-CE for M-TRP PDSCH transmission, UL transmission may be performed using only one TCI state among a plurality of TCI states (e.g., two TCI states).

However, a UE capable of STxMP transmission may use all of the plurality of TCI states in the above-described case, so the examples described below may be applied.

PUSCH scheduled by DCI format 0_0 may be transmitted in a single beam/panel. That is, when multiple TCI states are indicated, only one TCI state among the plurality of TCI states may be applied (Embodiment 3-1).

For example, only resources (e.g., a specific TCI state (e.g., the first TCI state) among multiple TCI states configured in the codepoint of the lowest ID CORESET resource or lowest ID PDSCH TCI state) that are the basis of the default spatial relation/PL RS may be applied (Embodiment 3-1a).

As another example, the resource that is the basis for the default spatial relation/PL RS may be redefined/changed to a resource with a single TCI state (or with a single TCI state set) (Embodiment 3-1b).

For example, default spatial relation/resource that serves as the basis for PL RS may be redefined/changed to RS (or, TCI state) corresponding to the lowest ID CORESET among CORESETs with a single TCI state (or with a single TCI state) or/and the codepoint of the lowest ID PDSCH TCI state among codepoints with a single TCI state.

PUSCH scheduled in DCI format 0_0 is also transmitted through multiple beams/panels by applying multiple TCI states, but only STxMP scheme 1 (i.e., a method of transmitting the same signal on each panel) may be applied (regardless of STxMP applied to PUSCH or other UL channels/RS scheduled in other DCI formats) (Embodiment 3-2).

For example, a separate enabler for STxMP application may be defined/configured for DCI format 0_0. If STxMP is enabled, among CORESET resources with multiple TCI states, multiple TCI states of the lowest ID CORESET resource may be applied to multiple beams/panels, or among the PDSCH TCI codepoints for which multiple TCI states are configured, the multiple TCI states of the lowest ID PDSCH TCI codepoint may be configured/defined to be applied to multiple beams/panels.

In the above-described example, a case may occur where the number of TRPs that can be transmitted exceeds the number of simultaneous transmission panels of the UE. For example, the number of TRPs that can be transmitted is three, but the number of simultaneous transmission panels of the UE may be two.

For example, the number of TCI states configured/indicated for a specific PDCCH/PDSCH transmission exceeds 2, but the UE may be capable of simultaneous transmission for up to two panels. At this time, Embodiment 3-3 based on Embodiment 3-1 and Embodiment 3-2 may be applied.

Specifically, if the maximum number M of resources that are the basis for the default spatial relation/PL RS (i.e., a TCI state that can be configured on a codepoint with the lowest ID CORESET resource or lowest ID PDSCH TCI state) exceeds the maximum number N applicable to PUSCH scheduled by DCI format 0_0, STxMP scheme 1 may be applied by selecting only specific N TCI states (Embodiment 3-3).

Here, N may be a fixed value (for example, 2), but is not limited thereto. N can be reported by UE capability.

As an example, only specific N TCI states (e.g., the first N TCI states) among the M TCI states configured in the resource that is the basis for the default spatial relation/PL RS may be applied (Embodiment 3-3a).

As another example, the resource that is the standard for the default spatial relation/PL RS may be redefined/changed to a resource having N (or less) TCI states (Embodiment 3-3b).

For example, default spatial relation/resource that serves as the basis for PL RS may be redefined as the lowest ID CORESET among CORESETs with N (or less) TCI states (i.e., CORESET with N (or fewer) TCI states configured), and the TCI state of the lowest ID PDSCH TCI codepoint among codepoints with N (or less) TCI states configured.

In conjunction with the above-described embodiment, the base station may transmit configuration information related to whether to apply STxMP transmission and/or whether to apply single panel transmission to the PUSCH scheduled by DCI format 0_0 to the UE through an RRC message.

Additionally or alternatively, whether to apply STxMP transmission to PUSCH and/or whether to apply single panel transmission may be indicated through a specific field of the corresponding DCI (e.g., using a new field or a reserved codepoint of an existing field).

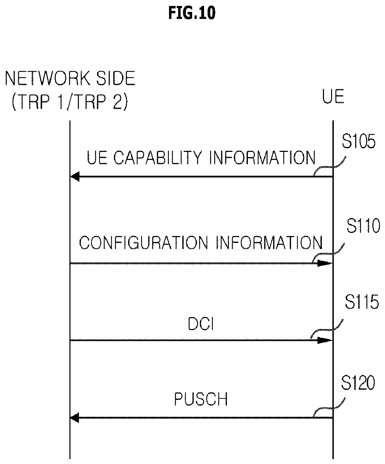

Figure 10 is a diagram for describing the signaling procedure of the network side and the UE according to an embodiment of the present disclosure.

FIG. 10 shows an example of signaling between a network side and a terminal (UE) in an M-TRP situation to which the embodiments of the present disclosure (e.g., Embodiment 1, Embodiment 2, Embodiment 3, or a combination of one or more of their specific Embodiments) described above may be applied.

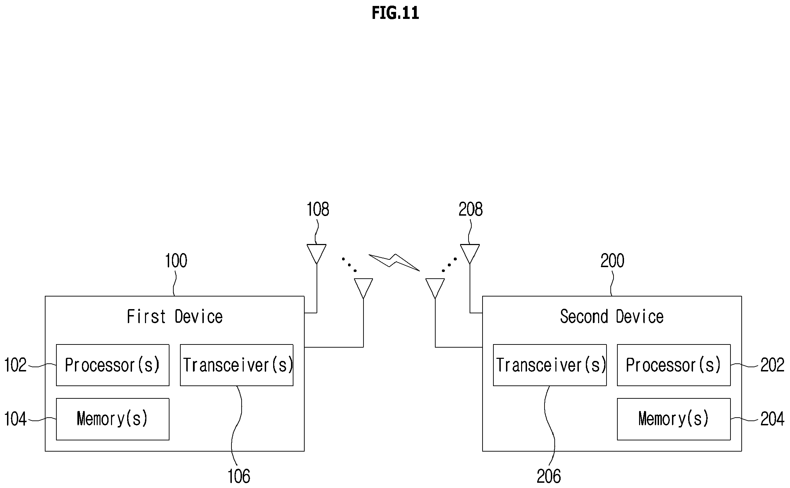

Here, the UE/network side is an example and may be replaced with various devices as described with reference to FIG. 11. FIG. 10 is for convenience of explanation and does not limit the scope of the present disclosure. Additionally, some step(s) shown in FIG. 10 may be omitted depending on the situation and/or settings. Additionally, in the operation of the network side/UE in FIG. 10, the above-described uplink transmission and reception operation, M-TRP-related operation, etc. may be referenced or used.

In the following description, the network side may be one base station including a plurality of TRPs, or may be one cell including a plurality of TRPs. Alternatively, the network side may include a plurality of remote radio heads (RRHs)/remote radio units (RRUs).

For example, an ideal/non-ideal backhaul may be established between TRP 1 and TRP 2 constituting the network side. In addition, although the following description is based on a plurality of TRPs, this may be equally extended and applied to transmission through a plurality of panels/cells, and may also be extended and applied to transmission through a plurality of RRHs/RRUs.

In addition, it is described based on a "TRP" in the following description, but as described above, a "TRP" may be applied by being substituted with an expression such as a panel, an antenna array, a cell (e.g., a macro cell/a small cell/a pico cell, etc.), a TP (transmission point), a base station(gNB, etc.), etc. As described above, a TRP may be classified according to information on a CORESET group (or a CORESET pool) (e.g., a CORESET index, an ID).

In an example, when one UE is configured to perform transmission and reception with a plurality of TRPs (or cells), it may mean that a plurality of CORESET groups (or CORESET pools) are configured for one terminal. A configuration on such a CORESET group (or a CORESET pool) may be performed through higher layer signaling (e.g., RRC signaling, etc.).

In addition, a base station may generally mean an object which performs transmission and reception of data with a terminal. For example, the base station may be a concept which includes at least one TP(Transmission Point), at least one TRP(Transmission and Reception Point), etc. In addition, a TP and/or a TRP may include a panel, a transmission and reception unit, etc. of a base station.

Hereinafter, it is assumed that the terminal and network side (or base station) support multiple panel-based transmission/reception.

The UE may receive configuration information from the network side through/using TRP1 and/or TRP2 (S105). Additionally, the panel may refer to a unit consisting of at least one antenna, antenna port, beam, and up/downlink RS/channel resources of the UE.

In one example, an uplink transmission panel may be identified based on the source RS (e.g., TCI state, spatial relation) for the uplink channel/RS. Additionally, an uplink/downlink transmission panel may be identified as a unit with a specific UL/DL resource set/group (ID) or a specific (panel-related) ID as the source RS.

The UE may transmit UE capability information to the network (S105).

UE capability information may include UE capability information related to the panel. For example, the UE capability information may include the maximum number of panels that a terminal can set, the maximum number of panels that a terminal can activate simultaneously, information on whether uplink multi-panel simultaneous transmission (for specific UL channels/RS) may be performed, and simultaneous transmission scheme information supported (for a specific UL channel/RS), etc.

The UE may report UE capability information related to the above-described embodiments (e.g., Embodiment 1, Embodiment 2, Embodiment 3, or one or more combinations of detailed examples thereof) to the network side. For example, the UE may report whether or not multiple beams/panels can be applied (for PUSCH scheduled by DCI format 0_0) to the network as UE capability information.

For example, the operation in which the UE (100 or 200 in FIG. 11) in step S105 described above transmits UE capability information to the network side (200 or 100 in FIG. 11) can be implemented by the device in FIG. 11, which will be described below. For example, referring to FIG. 11, one or more processors 102 may control one or more transceivers 106 and/or one or more memories 104 to receive the UE capability information, and one or more transceivers 106 may receive the UE capability information from the network side.

The UE may receive configuration information from the network (S110).

The configuration information may include information related to CORESET in which a plurality of TCI states are configured. The configuration information may include information related to network-side configuration (i.e., TRP configuration), resource allocation information related to transmission and reception based on M-TRP, and the like. The configuration information may be transmitted through higher layers (e.g., RRC, MAC CE). In addition, when the configuration information is defined or configured in advance, the corresponding step may be omitted.

As another example, the configuration information may include panel-related configuration information for uplink transmission of the terminal. As an example, panel-related configuration information may include information for uplink transmission (e.g., PUCCH, PUSCH, SRS, PRACH, etc.).

As another example, the configuration information may include configuration information (e.g., information on whether to transmit a single beam/panel application or transmit multiple beams/panels (for PUSCH scheduled by DCI format 0_0), etc.) related to the above-described embodiment (e.g., Embodiment 1, Embodiment 2, Embodiment 3, or a combination of one or more of the detailed Embodiments).

Additionally or alternatively, the configuration information may include information for configuring an STxMP scheme (applied to PUSCH, SRS, etc.) (based on UE capability information in S105).

The configuration information may be configured for the terminal through at least one of an RRC message, MAC-CE message, or DCI. The configuration information may be configured in the form of an existing information element (IE) and/or field (e.g., SRI field, etc.), or may be configured in the form of a newly defined IE and/or a newly defined field.

Additionally or alternatively, the configuration information may include at least one of unified TCI-related information, beam-related information to be applied to PUCCH/PUSCH/SRS, or UL power control-related information. Additionally, the setting information may include at least one of CORESET-related TCI state/QCL information or PDSCH-related TCI state/QCL setting information.

As described in the above-described embodiment (e.g., Embodiment 1, Embodiment 2, Embodiment 3, or a combination of one or more of the detailed Embodiments), multiple TCI states are configured in CORESET, multiple TCI states are configured in PDSCH TCI codepoint, or multiple TCI state/spatial relations may be configured in the PUCCH resource, or multiple unified TCI states may be configured/indicated for the UE.

For example, the operation of the UE (100 or 200 in FIG. 11) in step S110 described above receiving the configuration information from the network side (200 or 100 in FIG. 11) may be implemented by the device in FIG. 11, which will be described below. For example, referring to FIG. 11, one or more processors 102 may control one or more transceivers 106 and/or one or more memories 104, etc. to receive the setting information, and one or more transceivers 106 may receive the configuration information from the network side.

The UE may receive DCI (e.g., DCI format 0_0) from the network side (S115). Here, DCI may include information for scheduling PUSCH.

For example, the operation of the UE (100 or 200 in FIG. 11) in step S115 described above to receive the DCI from the network side (200 or 100 in FIG. 11) may be implemented by the device in FIG. 11, which will be described below. For example, referring to FIG. 11, one or more processors 102 may control one or more transceivers 106 and/or one or more memories 104 to receive the DCI, and one or more transceivers 106 may receive the DCI from a network side.

The UE may transmit PUSCH to the network based on configuration information and DCI (S120).

The spatial relation RS(s)/TCI state(s) to be applied to the PUSCH transmission may be determined by spatial relation RS(s)/TCI state(s) configured for a specific PUCCH resource, TCI state(s) configured for a specific CORESET resource, TCI state(s) configured at the codepoint of a specific PDSCH TCI state, and multiple unified TCI state(s) indicated/activated according to the above-described embodiment (e.g., Embodiment 1, Embodiment 2, Embodiment 3, or a combination of one or more of the detailed Embodiments).

Additionally or alternatively, a different transmission scheme than that applied to a PUSCH scheduled in a different UL DCI format may be applied to the PUSCH transmission. Additionally or alternatively, only single panel transmission or STxMP scheme 1 may be applied to the PUSCH transmission. For example, STxMP scheme 2-1 may be applied to DCI format 0_1/0_2, but STxMP scheme 1 may be applied to DCI format 0_0.

For example, the operation of the UE (100 or 200 in FIG. 11) in step S120 described above to transmit a PUSCH

EP 4 415 453 A1

to the network side (200 or 100 in FIG. 11) may be implemented by the device in FIG. 11, which will be described below. For example, referring to FIG. 11, one or more processors 102 may control one or more transceivers 106 and/or one or more memories 104 to transmit the PUSCH, and one or more transceivers 106 may transmit the PUSCH to the network.

<u>General Device to which the Present Disclosure may be applied</u>

FIG. 11 is a diagram which illustrates a block diagram of a wireless communication system according to an embodiment of the present disclosure.

In reference to FIG. 11, a first device 100 and a second device 200 may transmit and receive a wireless signal through a variety of radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure.

For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure.

One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital

22

Signal Processor), one or more DSPDs(Digital Signal Processing Device), one or more PLDs(Programmable Logic Device) or one or more FPGAs(Field Programmable Gate Arrays) may be included in one or more processors 102, 202.

Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands. One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection. One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure

A scope of the present disclosure includes software or machineexecutable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method of performing uplink transmission by a user equipment (UE) in a wireless communication system, the method comprising:

   receiving, from a base station, first configuration information related to simultaneous uplink transmission based on multiple spatial parameters;
   receiving, from the base station, downlink control information (DCI) format 0_0 for scheduling a physical uplink shared channel (PUSCH); and
   transmitting, to the base station, the PUSCH based on i) a single spatial parameter among the multiple spatial parameters or ii) the multiple spatial parameters,
   wherein at least one port of the PUSCH corresponds to the multiple spatial parameters.

2. The method of claim 1, wherein:
   based on the multiple spatial parameters being indicated by a unified transmission configuration indicator (TCI) state, the PUSCH is transmitted to the base station based on the single spatial parameter among the multiple spatial parameters.

3. The method of claim 1, wherein:
   based on the multiple spatial parameters being indicated by the unified TCI state, the PUSCH is transmitted to the base station based on the multiple spatial parameters.

4. The method of claim 1, wherein:
   the multiple spatial parameters include multiple spatial relation reference signals (RSs) or multiple TCI states configured for a physical uplink control channel (PUCCH) with a lowest ID among at least one PUCCH resource.

5. The method of claim 4, wherein:
   based on a single spatial relation RS among the multiple spatial relation RSs or a single TCI state among the multiple TCI states configured for the PUCCH resource with the lowest ID, the PUSCH is transmitted to the base station.

**6.** The method of claim 4, wherein:
based on the multiple relation RSs or the multiple TCI states configured for the PUCCH resource with the lowest ID, the PUSCH is transmitted to the base station.

**7.** The method of claim 1, wherein:
based on a spatial relation RS or a TCI state configured for a PUCCH resource with the lowest ID among at least one PUCCH resource for which the single spatial relation RS or single TCI state is configured, the PUSCH is transmitted to the base station.

**8.** The method of claim 1, wherein:
based on second configuration information related to a default beam for the PUSCH being received from the base station, the multiple spatial parameters include i) multiple TCI states configured for a control resource set (CORESET) with a lowest ID among at least one control resource set, or ii) multiple RSs corresponding to a codepoint with a lowest ID among codepoints of the TCI state configured for a physical downlink shared channel (PDSCH).

**9.** The method of claim 8, wherein:
the PUSCH is transmitted to the base station based on a single TCI state among TCI states configured for the CORESET with the lowest ID or a single RS among multiple RSs corresponding to the codepoint with the lowest ID.

**10.** The method of claim 8, wherein:
the PUSCH is transmitted to the base station based on a multiple TCI states configured for the CORESET with the lowest ID or multiple RSs corresponding to the codepoint with the lowest ID.

**11.** The method of claim 8, wherein:
based on a number of TCI states configured for a CORESET with the lowest ID or a number of multiple RSs corresponding to the codepoint with the lowest ID exceeding M, the PUSCH is transmitted to the base station based on N (the N is a natural number less than M) TCI states among the multiple TCI states configured for the CORESET with the lowest ID or N RSs among the multiple RSs corresponding to the codepoint with the lowest ID.

**12.** The method of claim 11, wherein:
the N is predefined or transmitted to the base station through UE capability information.

**13.** The method of claim 1, wherein:
based on a CORESET with a lowest ID among at least one CORESET for which a single TCI state is configured or the RS corresponding to a code point with a lowest ID among at least one code point indicating a single RS, the PUSCH is transmitted to the base station.

**14.** The method of claim 1, wherein:

the DCI includes indication information indicating whether to enable simultaneous uplink transmission based on the multiple spatial parameters, and
based on enabling of simultaneous uplink transmission based on the multiple spatial parameters being indicated by the indication information, the PUSCH is transmitted to the base station based on the multiple spatial parameters.

**15.** The method of claim 14, wherein:
based on disabling of simultaneous uplink transmission based on the multiple spatial parameters being indicated by the indication information, the PUSCH is transmitted to the base station based on a single spatial parameter among the multiple spatial parameters.

**16.** A user equipment (UE) that performs uplink transmission in a wireless communication system, the UE comprising:

at least one transceiver; and
at least one processor connected to the at least one transceiver,
wherein the at least one processor is configured to:

receive, from a base station through the at least one transceiver, first configuration information related to simultaneous uplink transmission based on multiple spatial parameters;

receive, from the base station through the at least one transceiver, downlink control information (DCI) format 0_0 for scheduling a physical uplink shared channel (PUSCH); and

transmit, to the base station through the at least one transceiver, the PUSCH based on i) a single spatial parameter among the multiple spatial parameters or ii) the multiple spatial parameters,

wherein at least one port of the PUSCH corresponds to the multiple spatial parameters.

17. A method of performing uplink reception by a base station in a wireless communication system, the method comprising:

transmitting, to a user equipment (UE), first configuration information related to simultaneous uplink transmission based on multiple spatial parameters;

transmitting, to the UE, downlink control information (DCI) format 0_0 for scheduling a physical uplink shared channel (PUSCH); and

receiving, from the UE, the PUSCH based on i) a single spatial parameter among the multiple spatial parameters or ii) the multiple spatial parameters,

wherein at least one port of the PUSCH corresponds to the multiple spatial parameters.

18. A base station that performs uplink reception in a wireless communication system, the base station comprising:

at least one transceiver; and

at least one processor connected to the at least one transceiver,

wherein the at least one processor is configured to:

transmit, to a user equipment (UE) through the at least one transceiver, first configuration information related to simultaneous uplink transmission based on multiple spatial parameters;

transmit, to the UE through the at least one transceiver, downlink control information (DCI) format 0_0 for scheduling a physical uplink shared channel (PUSCH); and

receive, from the UE through the at least one transceiver, the PUSCH based on i) a single spatial parameter among the multiple spatial parameters or ii) the multiple spatial parameters,

wherein at least one port of the PUSCH corresponds to the multiple spatial parameters.

19. A processing device configured to control a user equipment (UE) to perform uplink transmission in a wireless communication system, the processing device comprising:

at least one processor; and

at least one computer memory operatively coupled to the at least one processor and storing instructions for performing operations upon being executed by the at least one processor;

the operations include:

receiving, from a base station, first configuration information related to simultaneous uplink transmission based on multiple spatial parameters;

receiving, from the base station, downlink control information (DCI) format 0_0 for scheduling a physical uplink shared channel (PUSCH); and

transmitting, to the base station, the PUSCH based on i) a single spatial parameter among the multiple spatial parameters or ii) the multiple spatial parameters,

wherein at least one port of the PUSCH corresponds to the multiple spatial parameters.

20. At least one non-transitory computer readable medium storing at least one instruction,

based on the at least one instruction being executed by at least one processor, an apparatus for performing uplink transmission in a wireless communication system controls to:

receiving, from a base station, first configuration information related to simultaneous uplink transmission based on multiple spatial parameters;

receiving, from the base station, downlink control information (DCI) format 0_0 for scheduling a physical uplink shared channel (PUSCH); and

transmitting, to the base station, the PUSCH based on i) a single spatial parameter among the multiple spatial parameters or ii) the multiple spatial parameters,

wherein at least one port of the PUSCH corresponds to the multiple spatial parameters.

**FIG.1**

**FIG.2**

**FIG.3**

**FIG.4**

**FIG.5**

**FIG.6**

INITIAL CELL SEARCH

SYSTEM INFORMATION RECEPTION

RANDOM ACCESS PROCEDURE

GENERAL DL/UL Tx/Rx

PSS/SSS& [DLRS]& PBCH

PDCCH/ PDSCH (BCCH)

PRACH

PDCCH/ PDSCH

PUSCH

PDCCH/ PDSCH

PDCCH/ PDSCH

PUSCH/ PUCCH

S601    S602    S603    S604    S605    S606    S607    S608

· DL/UL ACK/NACK
· UE CQI/PMI RI REPORT
  USING PUSCH AND PUCCH

**FIG.7**

Layer group #1
for CW #1

Layer group #2
for CW #1

(a)

Layer group #1
for CW #1

Layer group #2
for CW #2

(b)

**FIG.8**

RECEIVING FIRST CONFIGURATION
INFORMATION RELATED TO SIMULTANEOUS
UPLINK TRANSMISSION BASED ON
MULTIPLE SPATIAL PARAMETERS FROM THE
BASE STATION — S810

RECEIVING DCI FORMAT 0_0 FOR
SCHEDULING A PUSCH FROM THE BASE
STATION — S820

TRANSMITTING THE PUSCH TO THE BASE
STATION BASED ON i) A SINGLE SPATIAL
PARAMETER OR ii) MULTIPLE SPATIAL
PARAMETERS AMONG MULTIPLE SPATIAL
PARAMETERS — S830

**FIG.9**

TRANSMITTING FIRST CONFIGURATION
INFORMATION RELATED TO SIMULTANEOUS
UPLINK TRANSMISSION BASED ON
MULTIPLE SPATIAL PARAMETERS TO THE
UE — S910

TRANSMITTING DCI FORMAT 0_0 FOR
SCHEDULING A PUSCH TO THE UE — S920

RECEIVING THE PUSCH FROM THE UE
BASED ON i) A SINGLE SPATIAL
PARAMETER OR ii) MULTIPLE SPATIAL
PARAMETERS AMONG MULTIPLE SPATIAL
PARAMETERS — S930

**FIG.10**

EP 4 415 453 A1

**FIG.11**

## INTERNATIONAL SEARCH REPORT

| International application No. |
|---|
| **PCT/KR2022/015186** |

### A. CLASSIFICATION OF SUBJECT MATTER

**H04W 72/04**(2009.01)i; **H04L 5/00**(2006.01)i; **H04W 72/12**(2009.01)i; **H04B 7/0404**(2017.01)i; **H04B 7/0456**(2017.01)i

According to International Patent Classification (IPC) or to both national classification and IPC

### B. FIELDS SEARCHED

Minimum documentation searched (classification system followed by classification symbols)

H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: spatial parameter, simultaneous transmission, PUSCH, DCI format 0_0, unified TCI, PUCCH

### C. DOCUMENTS CONSIDERED TO BE RELEVANT

| Category* | Citation of document, with indication, where appropriate, of the relevant passages | Relevant to claim No. |
|---|---|---|
| A | NOKIA et al. Summary #1 of Multi-TRP PUCCH and PUSCH Enhancements. R1-2108298, 3GPP TSG RAN WG1 #106-e, e-Meeting. 19 August 2021.<br>See sections 2.2 and 2.5. | 1-20 |
| A | VIVO. Further discussion on multi beam enhancement. R1-2106571, 3GPP TSG RAN WG1 #106-e, e-Meeting. 07 August 2021.<br>See section 2.2. | 1-20 |
| A | VIVO. Further discussion on SRS enhancement. R1-2108956, 3GPP TSG RAN WG1 #106bis-e, e-Meeting. 01 October 2021.<br>See sections 3.3 and 4.2. | 1-20 |
| A | ZTE. Enhancements on beam management for multi-TRP. R1-2106544, 3GPP TSG RAN WG1 Meeting #106-e, e-Meeting. 07 August 2021.<br>See sections 3.2-3.3. | 1-20 |
| A | US 2021-0243779 A1 (QUALCOMM INCORPORATED) 05 August 2021 (2021-08-05)<br>See paragraphs [0112]-[0121]; and claim 1. | 1-20 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **31 January 2023** | **31 January 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2022/015186**

| Patent document cited in search report | | | Publication date (day/month/year) | Patent family member(s) | | | Publication date (day/month/year) |
|---|---|---|---|---|---|---|---|
| US | 2021-0243779 | A1 | 05 August 2021 | BR | 112022014698 | A2 | 20 September 2022 |
| | | | | CN | 115053612 | A | 13 September 2022 |
| | | | | EP | 4101240 | A1 | 14 December 2022 |
| | | | | KR | 10-2022-0138378 | A | 12 October 2022 |
| | | | | TW | 202135581 | A | 16 September 2021 |
| | | | | WO | 2021-158628 | A1 | 12 August 2021 |

Form PCT/ISA/210 (patent family annex) (July 2022)